# EUROPEAN PATENT SPECIFICATION

(11) **EP 0 668 334 B1**
(45) Date of publication and mention of the grant of the patent: **30.12.1998**
(21) Application number: 95101861.3
(22) Date of filing: 10.02.1995
(51) Int. Cl.: C09D 167/00, C09D 133/06, C09D 5/03

(54) **Powder coating composition and method of coating a substrate therewith**
Pulverbeschichtungszusammensetzung und Verfahren zum Beschichten eines Substrats
Composition de revêtement en poudre et procédé pour revêtir un substrat avec une telle composition

(30) Priority: 10.02.1994 US 195890
(43) Date of publication of application: 23.08.1995
(73) Proprietor: CYTEC TECHNOLOGY CORP., Wilmington, Delaware 19801 (US)
(72) Inventor: Sansur, Sami M., Darien, CT 06820 (US); Jacobs III, William F., Bethel, CT 06801 (US)
(74) Representative: DIEHL GLAESER HILTL & PARTNER

(56) References cited:
- EP-A- 0 385 504
- EP-A- 0 575 034
- WO-A-92/22616
- GB-A- 2 254 328
- US-A- 3 474 054
- US-A- 5 166 288
- RESEARCH DISCLOSURE, vol. 351,no. 21, July 1993 HAVANT GB, pages 457-459, XP 000387247 W. JACOBS ET AL. 'Durable wrinkle finish powder coatings from powderlink 1174 and amine blocked sulfonic acid catalysts'

## Description

The present invention relates to a powder coating composition especially useful for providing a wrinkle finish on a substrate and a method of coating a substrate with the powder composition.

There is a growing demand for powder coating compositions which can provide a durable wrinkle finish upon curing on a substrate. U.S. Patent No. 4,341,819 discloses epoxy-resin-based powder coating compositions that obtain a wrinkle finish through the use of a methylene disalicylic curing agent. These wrinkle finishes, however, suffer from poor weatherability and thus are not acceptable for exterior use.

Powder coating compositions employing a glycoluril crosslinking agent, a hydroxyl functional resin and an amine blocked sulfonic acid catalyst are reported to provide a durable wrinkle finish in Research Disclosure, July 1993, No. 351, pages 457-9 and Japanese Patent Application No. 05-271577. The glycoluril crosslinker is a predominantly monomeric tetramethoxymethyl glycoluril commercially available, for example, from Cytec Industries Inc. (West Paterson, New Jersey) under the trade designation POWDERLINK® 1174 resin. Amine blocked para-toluenesulfonic acid or an amine blocked trifluoromethane sulfonic acid are employed as the catalysts to obtain a durable wrinkle finish.

European Patent Application Publication No. 575,034 also describes the use of amine blocked trifluoromethane sulfonic acid catalyst in a wrinkle finish powder coating composition. Hexamethoxymethyl melamine and tetramethoxymethyl glycoluril are mentioned as preferred curing agents, although only the use of tetramethoxymethyl glycoluril is exemplified. The strength of the acid is emphasized, as indicated by the fact that apparently no wrinkling could be obtained when employing an amine blocked weaker sulfonic acid such as amine blocked para-toluene sulfonic acid.

On the other hand, U.S. Patent No. 4,271,277 discloses that a wrinkle was obtained using a powder coating composition containing tetramethoxymethyl glycoluril and dimethyl ethanolamine blocked para-toluene sulfonic acid. This result was considered deleterious since the object of that reference was to obtain smooth coatings.

It is the object of the present invention to provide a curable composition which avoids the above mentioned drawbacks. This object is solved by the composition according to independent claim 1 and the method according to independent claim 14. Further advantageous features, aspects and details of the invention are evident from the dependent claims, the description and the examples.

This invention relates to curable powder coating compositions that can provide a durable decorative wrinkle finish upon cure. The powder coating compositions in accordance with the present invention contain, in their broadest concept, a triazine-type amino resin crosslinking agent, a hydroxyl functional resin and an amine blocked non-halogenated sulfonic acid catalyst.

A durable wrinkle finish powder coating composition employing a triazine-type amino crosslinking agent would be advantageous as such amino crosslinking agents provide different characteristics to the resulting coating than the glycoluril crosslinked coatings. Thus, a wrinkle finish powder coating composition employing a triazine-type amino crosslinker would provide a formulator with a greater degree of latitude in obtaining a durable decorative coating with desired attributes.

Triazine-type amino resin crosslinkers such as alkoxymethyl melamines and guanamines, however, in general have not found great application in powder coatings applications due to limited shelf life as a result of moderate to severe sintering problems. In addition, it has generally been thought that powder coating compositions containing such triazine-type amino crosslinkers would not result in a wrinkle finish because of their faster cure rate compared to glycoluril crosslinkers. Without being bound by any particular theory, it is believed that the wrinkles result from the cure rate differential between the surface and underlying portions of the coated composition, and that a quicker cure rate reduces the differential and thus the potential to wrinkle. Surprisingly, however, it has now been discovered that specific such triazine-type amino resin crosslinkers used in combination with amine blocked nonhalogenated sulfonic acid catalysts and hydroxyl functional resins provide powder coating compositions which not only have improved storage stability (diminished sintering), but also provide a durable wrinkle finish after thermosetting.

The present invention refers specifically to a curable powder coating composition comprising:
(i) an amino resin crosslinker component comprising one or more monomeric amino resins of the general formula (I), oligomers thereof or mixtures thereof 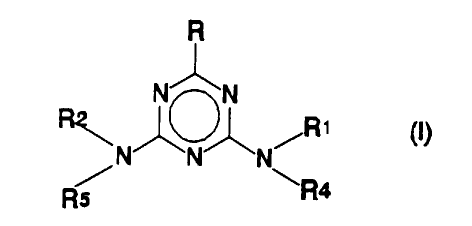 wherein
   R is selected from hydrogen, a hydrocarbyl group and a group of the formula N(R³)(R⁶),
   R¹, R² and R³ are independently selected from an alkoxymethyl group having from 1 to 6 carbon atoms in the alkoxy group, and
   R⁴ R⁵ and R⁶ are independently selected from hydrogen, a methylol group and an alkoxymethyl group having from 1 to 6 carbon atoms in the alkoxy group,
   with the proviso that the amino resin crosslinker component contains on average greater than 3 alkoxymethyl groups per amino resin molecule;
(ii) a solid hydroxyl functional resin; and
(iii) an amine blocked non-halogenated sulfonic acid catalyst.
Such powder coating compositions possess an improved storage stability as well as provide a durable wrinkle finish to a substrate onto which it is coated and cured.

Another aspect of the present invention includes a method of coating a substrate with a durable wrinkle finish coating by applying the powder coating composition of the present invention to the substrate and curing the coating composition applied thereto.

These and other features and advantages of the present invention will be more readily understood by those of ordinary skill in the art from a reading of the following detailed description.

### Amino Resin Crosslinker Component

As indicated above, the amino resin crosslinker component may comprise one or more monomeric, alkoxymethyl groups-containing, triazine-type amino resins of the general formula (I), oligomers thereof, or mixtures of such monomeric and oligomeric amino resins, with the proviso that the amino resin crosslinker component contains on average greater than 3 alkoxymethyl groups per amino resin molecule.

Alkoxymethyl amino resins of the general formula (I) are well-known materials and may be made by combining an amino resin with formaldehyde and etherifying with an alcohol. The alkoxymethyl amino resin crosslinkers prepared by this method may be monomeric and/or oligomeric, both of which are usable as the alkoxymethyl amino resin crosslinker of the present invention. These resins may also have partial methylol or imino functionality within the proviso as set forth above.

It should be noted that the term "hydrocarbyl," in the context of general formula (I) and the present invention, refers to groups which contain exclusively carbon and hydrogen atoms and includes, for example, alkyl, aryl, aralkyl, and alkenyl, as well as "hydrocarbyl" substituted derivatives thereof.

Preferred of the amino resins are those wherein R is selected from the group consisting of an alkyl of 1 to 20 carbon atoms, alkenyl of 3 to 20 carbon atoms, aryl of 6 to 20 carbon atoms, aralkyl of 7 to 20 carbon atoms, and a group of the formula N(R³)(R⁶). Particularly preferred are those wherein R is selected from a methyl group (acetoguanamine derivatives), an ethyl group (ethyl carboguanamine derivatives), a propyl group (propyl carboguanamine derivatives), a butyl group (butyl carboguanamine derivatives), a cyclohexyl group (cyclohexyl carboguanamine derivatives), a phenyl group (benzoguanamine derivatives), and a group of the formula N(R³)(R⁶) (melamine derivatives).

Also preferred are those amino resins which are more highly etherified, that is, those which contain higher amounts of alkoxymethyl groups. Although the amino resins may contain relatively minor amounts of imino (R⁴, R⁵ and/or R⁶ being H) and/or methylol (R⁴, R⁵ and/or R⁶ being methylol) functionality, the presence of imino and/or methylol functionality tends to increase the reactivity of the amino resin which, as indicated previously, is believed to decrease the desired wrinkle effect.

For the guanamine amino resins, it is preferred that the amino resin crosslinker component contains on average greater than 3.5 alkoxymethyl groups per molecule, and especially that the amino crosslinker is substantially fully etherified (substantially 4 alkoxymethyl groups per molecule). For the melamine amino resins, it is preferred that the amino resin crosslinker component contains on average greater than 3.5, more preferably greater than 4, still more preferably greater than 4.5, still more preferably greater than 5 and still more preferably greater than 5.5 alkoxymethyl groups per molecule, and especially that the amino crosslinker is substantially fully etherified (substantially 6 alkoxymethyl groups per molecule).

As indicated above, the alkoxy of the alkoxymethyl groups can contain from 1 to 6 carbon atoms. Particularly preferred are alkoxy groups containing from 1 to 4 carbon atoms, and especially methoxy, ethoxy, n-butoxy and i-butoxy.

An especially preferred guanamine amino resin crosslinker for use in the present invention is a tetramethoxymethyl benzoguanamine. An especially preferred melamine amino resin crosslinker for use in the present invention is a hexamethoxymethyl melamine, and particularly highly monomeric substantially fully etherified hexamethoxymethylmelamine. Most commercially available amino resin crosslinkers, however, are mixtures of various monomeric and oligomeric species with varying amounts of imino and methylol functionality, and these are also suitable for use in the present invention as long as they meet the limitations described above. As examples of suitable commercially available melamine and guanamine amino resin crosslinkers may be mentioned those available under the trade designation CYMEL® from Cytec Industries Inc., West Paterson, New Jersey. As specific examples may be mentioned the following (degree of oligomerization is the average number of triazine units per molecule):

### Methoxymethylmelamines

- CYMEL® 300: very low methylol/imino content, low degree of oligomerization (1.35)
- CYMEL® 301: low methylol/imino content, lower degree of oligomerization (1.5)
- CYMEL® 303: very low methylol/imino content, moderate degree of oligomerization (1.75)
- CYMEL® 350: high methylol/imino content, moderate degree of oligomerization (1.55)
- CYMEL® 323: high methylol/imino content, moderate degree of oligomerization (1.8)
- CYMEL® 325: high methylol/imino content, higher degree of oligomerization (2.3)
- CYMEL® 327: high methylol/imino content, moderate degree of oligomerization (1.75)
- CYMEL® 370: high methylol/imino content, higher degree of oligomerization (2.5)
- CYMEL® 373: high methylol/imino content, higher degree of oligomerization (2.0)
- CYMEL® 380: high methylol/imino content, higher degree of oligomerization (2.5)

### Butoxymethyl Melamines

- CYMEL® 1156: n-butoxy, low methylol/imino content, high degree of oligomerization (2.9)
- CYMEL® 1158: n-butoxy, high methylol/imino content, high degree of oligomerization (2.7)

### Mixed Alkoxymethyl Melamines

- CYMEL® 324: methoxy/n-butoxy, high methylol/imino content, higher degree of oligomerization (2.3)
- CYMEL® 1116: methoxy/ethoxy, very low methylol/imino content, lower degree of oligomerization (1.6)
- CYMEL® 1130: methoxy/n-butoxy, very low methylol/imino content, higher degree of oligomerization (2.5)
- CYMEL® 1131: methoxy/n-butoxy, very low methylol/imino content, low degree of oligomerization (1.4)
- CYMEL® 1133: methoxy/n-butoxy, very low methylol/imino content, lower degree of oligomerization (1.6)
- CYMEL® 1135: methoxy/n-butoxy, very low methylol/imino content, low degree of oligomerization (1.35)
- CYMEL® 11: 61 methoxy/i-butoxy, very low methylol/imino content, low degree of oligomerization (1.4)
- CYMEL® 1168: methoxy/i-butoxy, very low methylol/imino content, lower degree of oligomerization (1.6)

### Benzoguanamines

- CYMEL® 1123: methoxy/ethoxy, very low methylol/imino content, low degree of oligomerization

Amino resin crosslinkers having solid like characteristics are most preferred since liquids and semi-solids require additional effort to avoid unwanted agglomeration in powder coating compositions. Liquid and semi-solid amino resins, however, can be absorbed on organic and inorganic solid supports such as, for example, disclosed in European Patent Application Publication No. 470933. Specifically disclosed in that reference are supports comprising colloidal condensation polymers amino resins (urea-formaldehyde and/or melamine-formaldehyde) with pore volumes above 1 cm³/g (preferably above 2 cm³/g) and a specific surface area of above 5 m²/g.

### The Hydroxyl Functional Resin

The hydroxyl functional resin which is reactive with the amino resin crosslinker may be any solid resin which is conventionally known to have utility in powder coating systems. In general, such resins may have pendent or terminal hydroxyl functionality; preferably have glass transition temperatures between about 35°C and about 100°C, and more preferably between about 55°C and about 75°C; preferably have a weight average molecular weight of from about 750 to about 7000, and more preferably from about 2000 to about 5000; and preferably have hydroxyl numbers of from about 20 to about 70 mg KOH/g resin, more preferably from about 25 to about 55 mg KOH/g resin, and especially from about 25 to about 40 mg KOH/g resin.

Such resins include, for example, hydroxyl functional acrylic resins, hydroxyl functional polyurethane resins, and hydroxyl functional polyester resins and epoxy resins. Preferred are hydroxyl functional resins based on either acrylics or polyesters. A subset of resins having a particular utility for powder coating compositions are crystalline polyesters having low melt viscosities. These resins are derived from 1,4-butanediol and trans-1,4-cyclohexanedicarboxylic acids, and are more fully described in U.S. Patent No. 4,352,924. The polymers of the '924 patent tend to have lower melt viscosities and generally give better melt flow in powder coating compositions.

As examples of suitable commercially available hydroxyl functional resins may be mentioned the following:
1. Crylcoat™ 3109 polyester, a product of UCB Chemicals, Belgium,
2. Rucote™ 101 polyester resin, a product of Ruco Polymer Corporation,
3. Alftalat™ AN 745 polyester resin, a product of Hoechst Celanese Corporations,
4. Joncryl™ 800 acrylic resin, a product of S.C. Johnson Corporation, and
5. Crylcoat™ 3493 polyester resin, a product of UCB Chemicals, Belgium.
Other suitable hydroxyl functional resins will be readily recognized by those of ordinary skill in the art.

### Amine Blocked Non-Halogenated Sulfonic Acids

A wide variety of amine blocked non-halogenated sulfonic acid catalysts are suitable for use in the present invention.

The suitable non-halogenated sulfonic acids include those which in general are well-known in coatings applications. As specific preferred examples may be mentioned methane sulfonic acid, dodecylbenzene sulfonic acid, p-toluene sulfonic acid, naphthalene sulfonic acid, 3-pyridine sulfonic acid, sulfanilic acid, camphor sulfonic acid and 5-sulfosalicylic acid. Preferred are the non-halogenated aromatic sulfonic acids, and especially p-toluene sulfonic acid.

As used herein, amine blocked means an amine salt of the sulfonic acid. Suitable amines for blocking the sulfonic acid include, for example, amines represented by the following general formula (II): 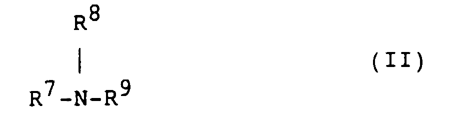 wherein R⁷, R⁸ and R⁹ are independently selected from hydrogen, a C₁ to C₆ alkyl group, and a hydroxy-substituted C₁ to C₆ alkyl group. Preferred are those wherein R⁷, R⁸ and R⁹ are independently selected from a C₁ to C₆ alkyl group and a hydroxy-substituted C₁ to C₆ alkyl group, and especially those wherein one of R⁷, R⁸ and R⁹ is a hydroxy-substituted C₁ to C₆ alkyl group. As specific preferred examples may be mentioned 2-dimethylamino-2-methyl-1-propanol and dimethylethanol amine.

Most preferably, the amine blocked aromatic sulfonic acid is the 2-dimethylamino-2-methyl-1-propanol salt of paratoluene sulfonic acid.

### Proportions of Components

The relative amounts of the components in accordance with the present invention are not critical. Any proportion of ingredients may be employed that results in a curable powder coating composition capable of providing a durable wrinkle finish after curing.

The amount of amino resin crosslinker employed is typically in the range of from 3 to 30 wt%, and preferably in the range of from about 6 to about 10 wt%, of the binder which, for the purposes of the present invention, is the combined weight of the crosslinker and the hydroxyl functional resin. Conversely, the amount of hydroxyl functional resin employed is typically in the range of from 70 to 97 wt%, and preferably in the range of from about 90 to about 94 wt%, of the binder.

The amount of amine blocked aromatic sulfonic acid employed is typically in the range of from 0.01 to 2 wt%, and preferably in the range of from about 0.05 to 0.5 wt%, of the binder.

The composition may also contain other conventional additives well known to those of ordinary skilled in the art of powder coating compositions. Such additives include pigments such as, for example, TiO₂ pigment and flow control agents. Typical flow control agents include, for example, Benzoin or Resiflow™ P-67 (an acrylic polymer absorbed on silica produced by Estron Corp.).

### Powder Coating Compositions

The powder coating compositions in accordance with the present invention may be prepared by any well-known method, for example, by dry mixing the components in a mixer or blender followed by compounding in an extruder and granulating, grinding and then screening to obtain a powder of suitable mesh size for coating. Alternatively, some or all of the components may be dissolved in a solvent such as methylene chloride and spray dried by well known techniques. Moreover, it may be preferable to masterbatch the amino resin crosslinking agents and the amine blocked sulfonic acid catalysts with the hydroxyl functional resin prior to mixing the components of the composition.

The powder coating method of the present invention is practiced by depositing the powder coating composition of the present invention on a substrate by any well-known means such as a powder gun, electrostatic deposition or deposition from a fluidized bed. After deposition, the powder is heated to a temperature sufficient to cause the particles to flow and cure to form a coating having a wrinkled finish on the substrate surface. Depending on the particular selection of components, the powder is preferably heated to temperatures between 110°C and 230°C, more preferably between about 150°C and about 230°C, and especially about 170°C to about 200°C.

The examples which follow are intended as an illustration of certain preferred embodiments of the invention, and no limitation of the invention is implied. In the following examples, all amounts are expressed as parts by weight.

### Example 1

A powder coating composition in accordance with the present invention was prepared by melt mixing the ingredients set forth in Table 1 below in a two roll mill at approximately 125°C for about 5 minutes. The resultant mixture was ground and classified to a powder paint of particle size of 35 µm (plus or minus 10 µm). The composition of Example 1 was electrostatically sprayed onto iron phosphate treated cold rolled steel panels to give the film properties shown in Table 2 below.

**TABLE 1**

| Component | Parts by Weight |
|---|---|
| CYMEL® 300 Resin | 8.00 |
| Crylcoat™ 3493² | 81.00 |
| Benzoin⁴ | 1.40 |
| R960³ | 4.00 |
| Resiflow™ P-67⁴ | 1.30 |
| X-320/3493 (2.6%)¹ | 11.40 |

| | |
|---|---|
| 1 X-320 is a 2-dimethylamino-2-methyl-1-propanol salt of para-toluene sulfonic acid in 50% isobutyl alcohol which is masterbatched with Crylcoat™ 3493 to provide a mixture having 2.6% X-320. | |
| 2 Crylcoat™ 3493 is a polyester hydroxyl resin from UCB Chemicals, Belgium. | |
| 3 R960 is TiO₂ pigment from DuPont. | |
| 4 Benzoin and Resiflow™ P-67 are flow control aids. | |

**TABLE 2**

| Substrate⁵ | BO 1000 | BO 1000 |
|---|---|---|
| Bake Temperature (°C) | 175 | 190 |
| Bake Time (min.) | 20 | 20 |
| MEK Rub | 200+ | 200+ |
| Film Appearance | Wrinkle Finish | Wrinkle Finish |
| Film Thickness | | |
| (µm) | 60.96/68.58 | 55.88/60.96 |
| (mils) | 2.4/2.7 | 2.2/2.4 |
| KNOOP Hardness | 12.5 | 12.7 |
| Pencil Hardness | H-2H | H-2H |
| Impact F/R [J (In. lbs.)] | 18.2/18.2 (160/160) | 15.9/18.2 (140/160) |
| Yellow Index | -1.12 | -0.55 |
| Gloss 60° | 3.4 | 3.8 |
| Gloss 20° | 2.2 | 2.3 |
| Gel Time⁶ (sec.) | 49 | 49 |
| Verticle Plate Flow⁷ | (cm) 4.0 | 4.0 |

| | | |
|---|---|---|
| 5 iron phosphate treated cold rolled steel | | |
| 6 at 200°C, using Powder Coating Institute Procedure No. 6, "Gel Time Reactivity," 1800 Diagonal Rel., Alexandria, VA. | | |
| 7 at 190°C for 20 minutes, similar to Powder Coating Institute Procedure No. 7 for Inclined Plate Flow. | | |

### Example 2

The procedure and formulation of Example 1 was followed except that CYMEL® 303 Resin was substituted for CYMEL® 300 Resin. The resulting composition was electrostatically sprayed onto iron phosphate treated cold rolled steel panels to give the film properties shown in Table 3 below:

**TABLE 3**

| | | |
|---|---|---|
| Substrate | BO 1000 | BO 1000 |
| Bake Temperature (°C) | 175 | 190 |
| Bake Time (min.) | 20 | 20 |
| MEK Rub | 200+ | 200+ |
| Film Appearance | Wrinkle Finish⁸ | Wrinkle Finish⁸ |
| Film Thickness | | |
| (µm) | 58.42/101.6 | 53.34/91.44 |
| (mils) | 2.3/4.0 | 2.1/3.6 |
| KNOOP Hardness | 12.9 | 12.4 |
| Pencil Hardness | H-2H | H-2H |
| Impact F/R [J. (In. lbs.)] | 18.2/18.2 (160/160) | 18.2/18.2 (160/160) |
| Yellow Index | -1.26 | -1.43 |
| Gloss 60° | 2.4 | 3.8 |
| Gloss 20° | 2.3 | 2.2 |
| Gel Time (sec.) | 93 | 93 |
| Verticle Plate Flow (cm) | 3.0 | 3.0 |

| | | |
|---|---|---|
| 8 star configuration | | |

### Example 3

The procedure and formulation of Example 1 was repeated except that substantially pure hexamethoxymethylmelamine (white solid, melting point 46°C-48°C, purity confirmed by high performance size exclusion chromatography) was substituted for CYMEL® 300 Resin. The resulting composition was electrostatically sprayed onto iron phosphate treated cold rolled steel panels to give the film properties shown in Table 4 below.

**TABLE 4**

| | | |
|---|---|---|
| Substrate | BO 1000 | BO 1000 |
| Bake Temperature (°C) | 175 | 190 |
| Bake Time (min.) | 20 | 20 |
| MEK Rub | 200+ | 200+ |
| Film Appearance | Wrinkle Finish⁸ | Wrinkle Finish⁸ |
| Film Thickness | | |
| (µm) | 73.66 | 81.28 |
| (mils) | 2.9 | 3.2 |
| KNOOP Hardness | 12.9 | ---- |
| Pencil Hardness | H-2H | H-2H |
| Impact F/R [J (In. lbs.)] | 18.2/18.2 (160/160) | 18.2/13.6 (160/120) |
| Yellow Index | -3.20 | -1.74 |
| Gloss 60° | 2.3 | 2.2 |
| Gloss 20° | 2.9 | 3.1 |
| Gel Time (sec.) | 85 | 85 |
| Verticle Plate Flow (cm) | 4.0 | 4.0 |

| | | |
|---|---|---|
| 8 star configuration | | |

### Example 4

The procedure and formulation of Example 3 was followed except that 84.4 parts by weight of Crylcoat™ 3493 and 7.8 parts by weight of 2.6% X-320/3493 was employed in the formulation. The resulting composition was electrostatically sprayed onto iron phosphate treated cold rolled steel panels to give the film properties shown in Table 5 below.

**TABLE 5**

| | | |
|---|---|---|
| Substrate | BO 1000 | BO 1000 |
| Bake Temperature (°C) | 175 | 190 |
| Bake Time (min.) | 20 | 20 |
| MEK Rub | 200+ | 200+ |
| Film Appearance | Wrinkle Finish⁹ | Wrinkle Finish⁹ |
| Film Thickness | | |
| (µm) | 96.52/116.84 | 106.68/132.08 |
| (mils) | 3.8/4.6 | 4.2/5.2 |
| KNOOP Hardness | 13.0 | 13.5 |
| Pencil Hardness | H-2H | H-2H |
| Gloss 60° | 3.3 | 3.3 |
| Gloss 20° | 2.2 | 2.3 |
| Gel Time (Sec.) | 93 | 93 |
| Verticle Plate Flow (cm) | 5.5 | 5.5 |

| | | |
|---|---|---|
| 9 occasional star like configuration | | |

The results set forth in Tables 2-5 show that the inventive powder coating composition cures to a wrinkle finish. These results also show that the configuration of the wrinkle can be altered based on the type of alkoxymethylmelamine amino resin crosslinker and the amount of the amine blocked aromatic sulfonic acid employed.

### Comparative Example 1

A powder coating formulation was prepared utilizing a trismethoxymethyl melamine. This powder coating was applied to a substrate and, although a durable film was obtained after curing, substantially no wrinkling effect in the cured film was observed.

## Claims

1. A curable powder coating composition comprising:
(i) an amino resin crosslinker component comprising one or more monomeric amino resins of the general formula (I), oligomers thereof or mixtures thereof 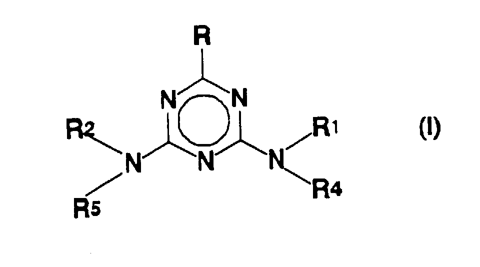 wherein
R is selected from hydrogen, a hydrocarbyl group and a group of the formula N(R³)(R⁶),
R¹, R² and R³ are independently selected from an alkoxymethyl group having from 1 to 6 carbon atoms in the alkoxy group, and
R⁴, R⁵ and R⁶ are independently selected from hydrogen, a methylol group and an alkoxymethyl group having from 1 to 6 carbon atoms in the alkoxy group,
with the proviso that the amino resin crosslinker component contains on average greater than 3 alkoxymethyl groups per amino resin molecule;
(ii) a solid hydroxyl functional resin; and
(iii) an amine blocked non-halogenated sulfonic acid catalyst.

2. The curable powder coating composition of claim 1, characterized in that the amino resin crosslinker component is substantially fully etherified.

3. The curable powder coating composition of claim 1 or 2, characterized in that the amino resin crosslinker component is a tetramethoxymethyl benzoguanamine.

4. The curable powder coating composition of one of the preceding claims, characterized in that R is a group of the formula N(R³)(R⁶).

5. The curable powder coating composition of one of the preceding claims, characterized in that the amino resin crosslinker component contains on average greater than 4 alkoxymethyl groups per molecule.

6. The curable powder coating composition of claim 5, characterized in that the amino resin crosslinker component contains on average greater than 5 alkoxymethyl groups per molecule.

7. The curable powder coating composition of one of the preceding claims, characterized in that the amino resin crosslinker component is a hexamethoxymethyl melamine.

8. The curable powder coating composition of one of the preceding claims, characterized in that the amino resin crosslinker component comprises a liquid or semi-solid amino resin absorbed on a solid substrate.

9. The curable powder coating composition of one of the preceding claims, characterized in that the non-halogenated non-halogenated sulfonic acid of the amine blocked sulfonic acid catalyst is an aromatic sulfonic acid.

10. The curable powder coating composition of claim 9, characterized in that the aromatic sulfonic acid is para-toluene sulfonic acid.

11. The curable powder coating composition of one of the preceding claims, characterized in that the amine of the amine blocked aromatic sulfonic acid is represented by the general formula (II): 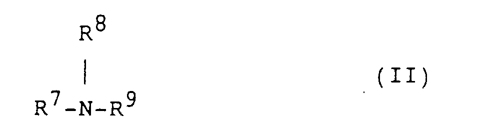 wherein R⁷, R⁸ and R⁹ are independently selected from hydrogen, a C₁ to C₆ alkyl group, and a hydroxy-substituted C₁ to C₆ alkyl group.

12. The curable powder coating composition of one of the preceding claims, characterized in that the amine blocked non-halogenated sulfonic acid is para-toluene sulfonic acid blocked by 2-dimethylamino-2-methyl-1-propanol.

13. The curable powder coating composition of one of the preceding claims, characterized in that the amount of amino resin crosslinker component is in the range of from 3 to 30 wt% of the binder, the amount of hydroxyl functional resin is in the range of from 70 to 97 wt% of the binder, and the amount of amine blocked non-halogenated sulfonic acid catalyst is the range of from 0.01 to 2 wt% of the binder.

14. A method of coating a substrate with a durable wrinkle finish coating by the steps of (1) applying the powder coating composition of any one of claims 1-13 to a substrate, and (2) heating the same until cure.

15. The method of claim 14, wherein the heating is conducted at a temperature between 110°C and 230°C.

## Patentansprüche

1. Härtbare Pulverbeschichtungszusammensetzung mit:
(i) einer Aminoharzvernetzerkomponente mit einem oder mehreren monomeren Aminharzen der allgemeinen Formel (I), Oligomeren hiervon oder Mischungen hiervon 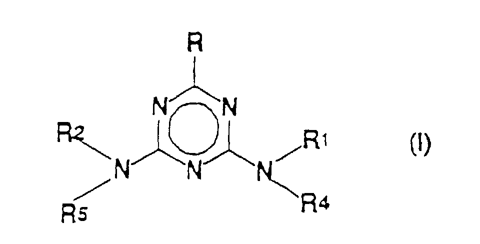 wobei
R ausgewählt ist aus Wasserstoff, einem Hydrocarbylrest und einem Rest der Formel N(R³) (R⁶),
R¹, R2 und R³ unabhängig ausgewählt sind aus einem Alkoxymethylrest mit 1 bis 6 Kohlenstoffatomen in dem Alkoxyrest, und
R⁴, R⁵ und R6 unabhängig ausgewählt sind aus Wasserstoff, einer Methylolgruppe und einem Alkoxymethylrest mit 1 bis 6 Kohlenstoffatomen in dem Alkoxyrest,
vorausgesetzt, daß die Aminoharzvernetzerkomponente im Durchschnitt mehr als 3 Alkoxymethylreste pro Aminoharzmolekül enthält;
(ii) einem festen Harz mit Hydroxylfunktion; und
(iii) einem amingeblockten nicht halogenierten Sulfonsäurekatalysator.

2. Härtbare Pulverbeschichtungszusammensetzung gemäß Anspruch 1, dadurch gekennzeichnet, daß die Aminoharzvernetzerkomponente im wesentlichen vollständig verethert ist.

3. Härtbare Pulverbeschichtungszusammensetzung gemäß Anspruch 1 oder 2, dadurch gekennzeichnet, daß die Aminoharzvernetzerkomponente ein Tetramethoxymethylbenzoguanamin ist.

4. Härtbare Pulverbeschichtungszusammensetzung gemäß einem der vorhergehenden Ansprüche, dadurch gekennzeichnet, daß R ein Rest der Formel N(R³) (R⁶⁾ ist.

5. Härtbare Pulverbeschichtungszusammensetzung gemäß einem der vorhergehenden Ansprüche, dadurch gekennzeichnet, daß die Aminoharzvernetzerkomponente im Durchschnitt mehr als 4 Alkoxymethylreste pro Molekül enthält.

6. Härtbare Pulverbeschichtungszusammensetzung gemäß Anspruch 5, dadurch gekennzeichnet, daß die Aminoharzvernetzerkomponente im Durchschnitt mehr als 5 Alkoxymethylreste pro Molekül enthält.

7. Härtbare Pulverbeschichtungszusammensetzung gemäß einem der vorhergehenden Ansprüche, dadurch gekennzeichnet, daß die Aminoharzvernetzerkomponente ein Hexamethoxymethylmelamin ist.

8. Härtbare Pulverbeschichtungszusammensetzung gemäß einem der vorhergehenden Ansprüche, dadurch gekennzeichnet, daß die Aminoharzvernetzerkomponente ein flüssiges oder halbfestes Aminharz, absorbiert auf einem festen Substrat, enthält.

9. Härtbare Pulverbeschichtungszusammensetzung gemäß einem der vorhergehenden Ansprüche, dadurch gekennzeichnet, daß die nicht halogenierte Sulfonsäure des amingeblockten nicht halogenierten Sulfonsäurekatalysators eine aromatische Sulfonsäure ist.

10. Härtbare Pulverbeschichtungszusammensetzung gemäß Anspruch 9, dadurch gekennzeichnet, daß die aromatische Sulfonsäure Paratoluensulfonsäure ist.

11. Härtbare Pulverbeschichtungszusammensetzung gemäß einem der vorhergehenden Ansprüche, dadurch gekennzeichnet, daß das Amin der amingeblockten aromatischen Sulfonsäure durch folgende allgemeine Formel (II) dargestellt ist: 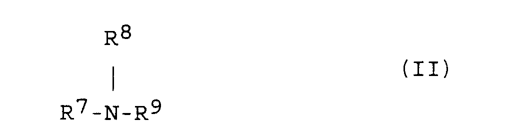 wobei R⁷, R⁸, und R⁹ unabhängig ausgewählt sind aus Wasserstoff, einem C₁- bis C₆-Alkylrest und einem hydroxysubstituierten C₁- bis C₆-Alkylrest.

12. Härtbare Pulverbeschichtungszusammensetzung gemäß einem der vorhergehenden Ansprüche, dadurch gekennzeichnet, daß es sich bei der amingeblockten nicht halogenierten Sulfonsäure um Paratoluensulfonsäure, geblockt durch 2-Dimethylamino-2-methyl-1-propanol, handelt.

13. Härtbare Pulverbeschichtungszusammensetzung gemäß einem der vorhergehenden Ansprüche, dadurch gekennzeichnet, daß die Menge der Aminoharzvernetzerkomponente im Bereich von 3 bis 30 Gew.% des Bindemittels, die Menge des Harzes mit Hydroxylfunktion im Bereich von 70 bis 97 Gew.% des Bindemittels und die Menge des amingeblockten nicht halogenierten Sulfonsäurekatalysators im Bereich von 0,01 bis 2 Gew.% des Bindemittels liegt.

14. Verfahren zur Beschichtung eines Substrats mit einer dauerhaften Kräuselfinishbeschichtung durch die Schritte (1) Auftragen der Pulverbeschichtungszusammensetzung gemäß einem der Ansprüche 1 - 13 auf ein Substrat und (2) Erwärmung hiervon bis zur Härtung.

15. Verfahren gemäß Anspruch 14, bei dem die Erwärmung bei einer Temperatur zwischen 110°C und 230°C erfolgt.

## Revendications

1. Composition de revêtement en poudre durcissable comprenant :
(i) un composant réticulant à base de résine aminique comprenant une ou plusieurs résines aminiques monomères de formule générale (I), des oligomères de celles-ci, ou leurs mélanges 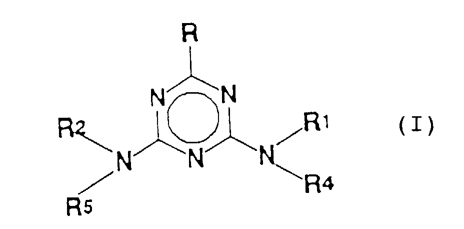 où
R est choisi parmi un atome d'hydrogène, un groupe hydrocarbyle et un groupe de formule N(R³)(R⁶),
R¹, R² et R³ sont indépendamment choisis parmi un groupe alcoxyméthyle ayant de 1 à 6 atomes de carbone dans le groupe alcoxy, et
R⁴, R⁵ et R⁶ sont indépendamment choisis parmi un atome d'hydrogène, un groupe méthylol et un groupe alcoxyméthyle ayant de 1 à 6 atomes de carbone dans le groupe alcoxy,
à la condition que le composant réticulant à base de résine aminique contienne en moyenne plus de 3 groupes alcoxyméthyles par molécule de résine aminique;
(ii) une résine à fonction hydroxyle, solide; et
(iii) un catalyseur à base d'acide sulfonique non halogéné bloqué par une amine.

2. Composition de revêtement en poudre durcissable selon la revendication 1, caractérisée par le fait que le composant réticulant à base de résine aminique est presque complètement éthérifié.

3. Composition de revêtement en poudre durcissable selon la revendication 1 ou 2, caractérisée par le fait que le composant réticulant à base de résine aminique est une tétraméthoxyméthylbenzoguanamine.

4. Composition de revêtement en poudre durcissable selon l'une quelconque des revendications précédentes, caractérisée par le fait que R est un groupe de formule N(R³)(R⁶).

5. Composition de revêtement en poudre durcissable selon l'une quelconque des revendications précédentes, caractérisée par le fait que le composant réticulant à base de résine aminique contient en moyenne plus de 4 groupes alcoxyméthyles par molécule.

6. Composition de revêtement en poudre durcissable selon la revendication 5, caractérisée par le fait que le composant réticulant à base de résine aminique contient en moyenne plus de 5 groupes alcoxyméthyles par molécule.

7. Composition de revêtement en poudre durcissable selon l'une quelconque des revendications précédentes, caractérisée par le fait que le composant réticulant à base de résine aminique est une hexaméthoxyméthylmélamine.

8. Composition de revêtement en poudre durcissable selon l'une quelconque des revendications précédentes, caractérisée par le fait que le composant réticulant à base de résine aminique comprend une résine aminique liquide ou semi-solide absorbée sur un substrat solide.

9. Composition de revêtement en poudre durcissable selon l'une quelconque des revendications précédentes, caractérisée par le fait que l'acide sulfonique non halogéné du catalyseur à base d'acide sulfonique non halogéné bloqué par une amine est un acide sulfonique aromatique.

10. Composition de revêtement en poudre durcissable selon la revendication 9, caractérisée par le fait que l'acide sulfonique aromatique est l'acide para-toluènesulfonique.

11. Composition de revêtement en poudre durcissable selon l'une quelconque des revendications précédentes, caractérisée par le fait que l'amine de l'acide sulfonique aromatique bloqué par une amine est représentée par la formule générale (II) : 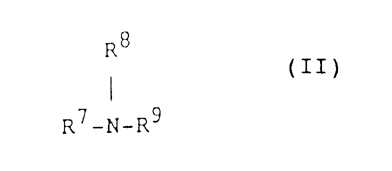 dans laquelle R⁷, R⁸ et R⁹ sont indépendamment choisis parmi un atome d'hydrogène, un groupe alkyle en C₁ à C₆, et un groupe alkyle en C₁ à C₆ substitué par un groupe hydroxy.

12. Composition de revêtement en poudre durcissable selon l'une quelconque des revendications précédentes, caractérisée par le fait que l'acide sulfonique non halogéné bloqué par une amine est l'acide para-toluènesulfonique bloqué par du 2-diméthylamino-2-méthyl-1-propanol.

13. Composition de revêtement en poudre durcissable selon l'une quelconque des revendications précédentes, caractérisée par le fait que la quantité de composant réticulant à base de résine aminique est comprise entre 3 et 30% en poids du liant, la quantité de résine à fonction hydroxyle est comprise entre 70 et 97% en poids du liant, et la quantité de catalyseur à base d'acide sulfonique non halogéné bloqué par une amine est comprise entre 0,01 et 2% en poids du liant.

14. Procédé pour revêtir un substrat avec une couche de finition ridée durable, par les étapes consistant à (1) appliquer la composition de revêtement en poudre selon l'une quelconque des revendications 1 à 13 sur un substrat, et (2) chauffer celle-ci jusqu'à ce qu'elle durcisse.

15. Procédé selon la revendication 14, dans lequel le chauffage est effectué à une température comprise entre 110°C et 230°C.
